# EUROPEAN PATENT SPECIFICATION

(11) **EP 2 586 898 B1**
(45) Date of publication and mention of the grant of the patent: **04.06.2014**
(21) Application number: 11186564.8
(22) Date of filing: 25.10.2011
(51) Int. Cl.: D06F 33/02, D06F 39/00, D06F 37/30

(54) **Inrush current control system**
Einschaltstromsteuersystem
Système de contrôle de courant d'appel

(43) Date of publication of application: 01.05.2013
(73) Proprietor: Electrolux Home Products Corporation N.V., 1130 Brussel (BE)
(72) Inventor: Cecco, Alessandro, I-33080 PORCIA (PN) (IT); Driussi, Paolo, I-33080 PORCIA (PN) (IT); Lorenzi, Marco, I-33080 PORCIA (PN) (IT); Dorigo, Hubert, I-33080 PORCIA (PN) (IT)
(74) Representative: Maccalli, Marco

(56) References cited:
- DE-A1-102006 060 208
- GB-A- 2 095 705
- US-A1- 2009 031 734
- US-A1- 2009 049 844

## Description

### Field of the Invention

The present invention relates to laundry machines. Particularly, the invention relates to a control system for limiting the inrush current drawn by the inverter supply block of a laundry machine.

### Description of the Related Art

In the present description the term "laundry machine" will refer to washing machines, tumble dryers as well as washing/drying machines adapted to process (*e*.*g*., wash, dry or wash/dry) laundry by means of an operative fluid; depending on the type of laundry machine, in the present description the term "operative fluid" may refer to water or water mixed with washing and/or rinsing products (washing machine and washing/drying machine), or to drying air (tumble dryer and washing/drying machine).

Typically, a laundry machine is provided with a rotatable drum adapted to contain laundry; the rotatable drum is operated by an electric motor, such as a brushless motor or an asynchronous motor. In order to control the rotational speed of such electric motor, it is known to power supply the latter by an inverter supply block (*i.e.,* a supply source including an inverter). An inverter supply block may be advantageously exploited for supplying other apparatuses of the laundry machine, such as for example compressors, pumps and fans.

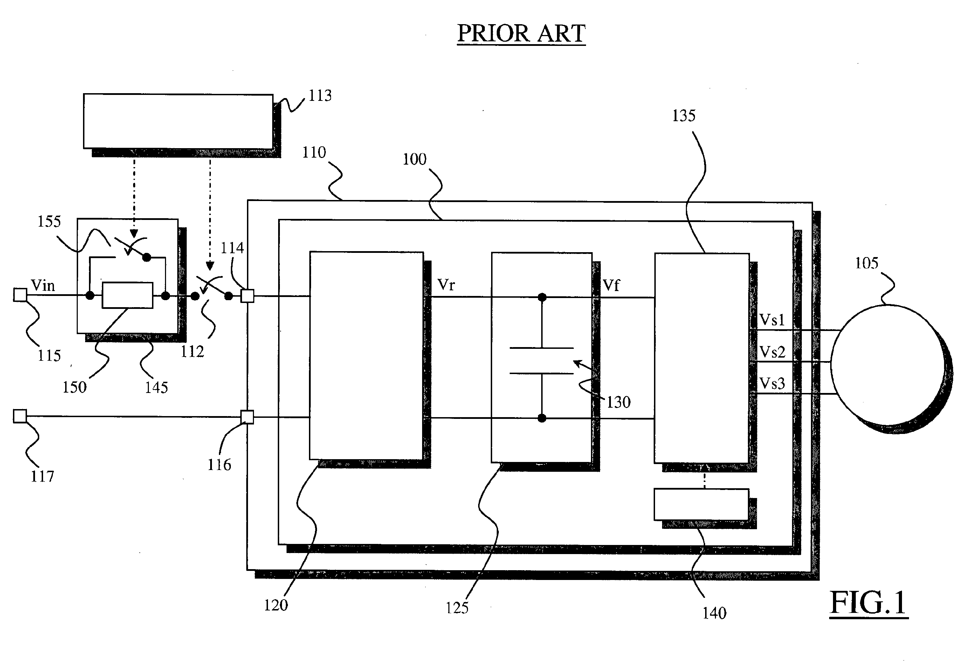

**Figure 1** schematically illustrates in terms of functional elements an example of a known inverter supply block **100** for the supplying of an electric motor **105** of a laundry machine (not illustrated).

The inverter supply block **100** is mounted on a Printed Circuit Board (PCB) **110** installed within the housing of the laundry machine. The inverter supply block **100** is adapted to selectively receive from an AC power supply - *e*.*g*., the mains - an input AC voltage **Vin** through an input switch **112,** whose opening and closing is set by a logic circuit block **113,** such as the control unit of the laundry machine. For example, the supply block **100** includes an input port having a first terminal **114** coupled to the line terminal of the mains - identified in figure with the reference **115 -** through the input switch **112**, and a second terminal **116** directly coupled to the neutral terminal of the mains - identified in figure with the reference **117.**

When the input switch **112** is closed, the input voltage **Vin** is provided to the inverter supply block **100,** which outputs a corresponding set of AC supply voltages **Vs1, Vs2** and **Vs3** to be provided to the electric motor **105** for the operation thereof.

The inverter supply block **100** includes a rectifier circuit **120**, *e.g.*, a diode bridge, adapted to convert the input voltage **Vin** (which is a sinusoidal voltage) into a unipolar rectified voltage **Vr**. The variations in the magnitude of the rectified voltage **Vr** are reduced by a filter circuit **125** comprising a bulk capacitor **130**. Even if still containing an unavoidable time-dependent component, the filtered voltage **Vf** output by the filter circuit **130** is a substantially DC voltage. The filtered voltage **Vf** is fed to an inverter circuit **135**, which accordingly generates the supply voltages **Vs1**, **Vs2** and **Vs3** by means of switching elements (not illustrated) driven by a timing logic circuit **140**. The inverter circuit **135** is configured so that the supply voltages **Vs1**, **Vs2** and **Vs3** substantially oscillate at a certain frequency with a certain magnitude and a certain mutual phase difference specifically set to correctly drive the motor **105**.

Since the bulk capacitor **130** typically has a quite high capacity, *e.g.*, on the order of 4-500 µF, the above described inverter supply block **100** has a high inrush current. As it is well known to those skilled in the art, the term "inrush current" means the maximum instantaneous input current drawn by an electrical device when turned on. When the input switch **112** is closed, and the input voltage **Vin** is provided to the inverter supply block **100** for the first time, the bulk capacitor **130** is completely discharged. Thus, the input current initially drawn from the mains by the inverter supply block **100** for charging the bulk capacitor **130** (*i.e.,* the inrush current of the supply block **100**) has a high value. The period of time spent for charging the bulk capacitor **130** will be hereinafter referred to as "bulk capacitor charging phase". Since such high inrush current may gradually damage the components of the inverter supply block **100,** and potentially cause the blowing of the supply's fuses (not illustrated) and/or the triggering of circuit breakers (also not illustrated), a limiter circuit **145** is typically provided between the switch **112** and the mains providing the input voltage **Vin** (as illustrated in **Figure 1**), or between the switch **112** and the input of the inverter supply block **110**, to limit the current drawn by the latter during the bulk capacitor charging phase.

According to a solution known in the art, the limiter circuit **145** includes a Negative Temperature Coefficient (NTC) thermistor **150** connected in parallel with a switch **155**, whose opening and closing is for example set by the same logic circuit block **113** driving the switch **112**. As it is well known to those skilled in the art, an NTC thermistor has a resistance which decreases as its temperature increases. Initially, the switch **155** is open, and the NTC thermistor **150** has a relatively high resistance. When the switch **112** is closed, the current drawn by the inverter supply block **100** from the mains for charging the (initially discharged) bulk capacitor **130** is limited because of the resistance of the NTC thermistor **150**, and thus the corresponding inrush current value advantageously results to be lower. The voltage drop initially introduced by the relatively high resistance of the NTC thermistor **150** - which affects the actual voltage provided to the input of the inverter supply block **100** - decreases over time, since the current flow heats up the NTC thermistor **150**, correspondingly reducing its resistance. After a predetermined amount of time, set in such a way to allow the bulk capacitor **130** to be sufficiently charged, the switch **155** closes. Therefore, after the completion of the bulk capacitor charging phase, the NTC thermistor **150** is bypassed, so that the actual voltage provided to the input of the inverter supply block **100** equals the input voltage **Vin** provided by the mains.

DE 102206060208 discloses a device for determining and limiting over current in coil in three-phase or poly-phase electrical motor for use in washing machine The device has a comparator, by which current to be measured on the common terminal post is compared in the direct current voltage intermediate circuit with a reference value. The current is supplied to an electric motor (3) over frequency converter (4) or an inverter with controlled half-bridges. The reference value is formed from the sum of the constant component or a part of the measured current and a fixed pre-regulated value.

US 2009/031734 discloses a circuit arrangement for a Peltier module for use in a Peltier heat pump for a tumble dryer with the circuit arrangement including a Peltier module having at least one series arrangement of Peltier elements, with each series arrangement of Peltier elements being configured to receive voltage; and a two-position transfer switch wherein at a first position voltage is applied to the Peltier module and at a second position voltage is not applied to the Peltier module and the Peltier module is connected to another electrical device.

### Summary of the invention

According to the Applicant, the aforementioned solution for limiting the inrush current of the inverter supply block of a laundry machine is not efficient in terms of cost, design requirements and space occupation within the housing accommodating all the components of the laundry machine. Indeed, the solution described above requires a dedicated limiter circuit comprising an NTC thermistor, which has to be installed and properly interconnected with the inverter supply block within the housing of the laundry treatment apparatus.

The Applicant has observed that a laundry machine is already provided with resistive elements having a resistance value comparable to that of the NTC thermistor usually employed to reduce the inrush current. Such resistive elements already installed in the laundry machine are the resistance heater(s) normally included in the laundry machine heater apparatus and used to heat up the operative fluid (*e*.*g*., water, for example mixed with washing and/or rinsing products, in a washing machine or washing/drying machine, or air in a tumble drier or in a washing/drying machine) adapted to process (*e*.*g*, wash or dry) the laundry contained in the laundry machine drum. The Applicant has found that the abovementioned drawbacks may be solved by means of limiting the inrush current by exploiting such already present resistive elements in place of using a dedicated NTC thermistor. In other words according to the invention resistive elements already present in the machine are expediently exploited for limiting the inrush current during the charging of the bulk condenser.

An aspect of the present invention provides for a laundry machine adapted to process laundry by means of an operative fluid. The laundry machine comprises a drum for housing the laundry, an electrical heater apparatus configured to heat up the operative fluid, at least one electrical device, and an inverter supply block for electrically supplying the at least one electrical device; the inverter supply block comprises a bulk capacitor. The laundry machine further comprises a limiter circuit configured to temporarily limit a charging current drawn by the inverter supply block during a bulk capacitor charging phase. The limiter circuit is configured to selectively force the passage of the charging current through the electrical heater apparatus.

Compared to the known solution, the proposed limiter circuit is less expensive and do not require the installation of a dedicated NTC thermistor.

The electrical heater apparatus comprises at least one electric resistance heater. The limiter circuit is advantageously configured to selectively force the passage of the charging current through the at least one electric resistance heater during the bulk capacitor charging phase.

According to an embodiment of the present invention, the limiter circuit further comprises a switch switchable between a first configuration, wherein the inverter supply block is coupled to an AC power supply for receiving the charging current through the at least one electric resistance heater, and a second configuration, wherein the inverter supply block is coupled to the AC power supply for receiving the charging current bypassing the electric resistance heater.

The AC power supply comprises a first supply terminal and a second supply terminal. The electrical heater apparatus is coupled between the first supply terminal and the second supply terminal. According to an embodiment of the present invention, the inverter supply block includes a first input terminal selectively connectible to the first supply terminal through a further switch and a second input terminal selectively connectible to the second supply terminal or to the electrical heater apparatus through the switch.

The inverter supply block comprises a rectifier circuit adapted to convert a sinusoidal input voltage provided by the AC power supply into a unipolar rectified voltage and a filter circuit adapted to generate a filtered voltage from the rectified voltage; the filter circuit includes the bulk capacitor. The inverter supply block further comprises an inverter circuit adapted to generate supply voltages for the at least one electrical device from the filtered voltage.

According to an embodiment of the present invention, the laundry machine may be a washing machine, a dryer machine, or a washing/drying machine.

According to an embodiment of the present invention, said electrical device comprises at least one among an electric motor, a compressor, a pump, and a fan.

Another aspect of the present invention relates to a method for operating a laundry machine adapted to process laundry by means of an operative fluid. Said laundry machine comprises a drum for housing the laundry, an electrical heater apparatus configured to heat up the operative fluid, at least one electrical device, and an inverter supply block for electrically supplying the at least one electrical device. The inverter supply block comprises a bulk capacitor. The method comprises temporarily limiting a charging current drawn by the inverter supply block during a bulk capacitor charging phase. Said temporarily limiting a charging current comprises selectively forcing the passage of the charging current through the electrical heater apparatus.

According to an embodiment of the present invention said selectively forcing the passage of the charging current through the electrical heater apparatus comprises selectively forcing the passage of the charging current through at least one electric resistance heater during the bulk capacitor charging phase.

According to an embodiment of the present invention said method further includes coupling the inverter supply block to an AC power supply through the at least one electric resistance heater during the bulk capacitor charging phase, and coupling the inverter supply block to the AC power supply bypassing the electric resistance heater after the bulk capacitor charging phase.

### Brief description of the drawings

These and other features and advantages of the present invention will be made apparent by the following description of some exemplary and non limitative embodiments thereof; for its better intelligibility, the following description should be read making reference to the attached drawings, wherein:
**Figure 1** schematically illustrates in terms of functional elements a known inverter supply block for the supplying of an electric motor of a laundry machine;
**Figure 2** is a schematic sectional view of a laundry machine;
**Figure 3** schematically illustrates in terms of functional elements a limiter circuit for limiting the inrush current of the inverter supply block of **Figure 1** according to an embodiment of the present invention, and
**Figures 4A-4C** illustrate the flow of the current drawn by the inverter supply block according to an embodiment of the present invention.

### Detailed description of the invention

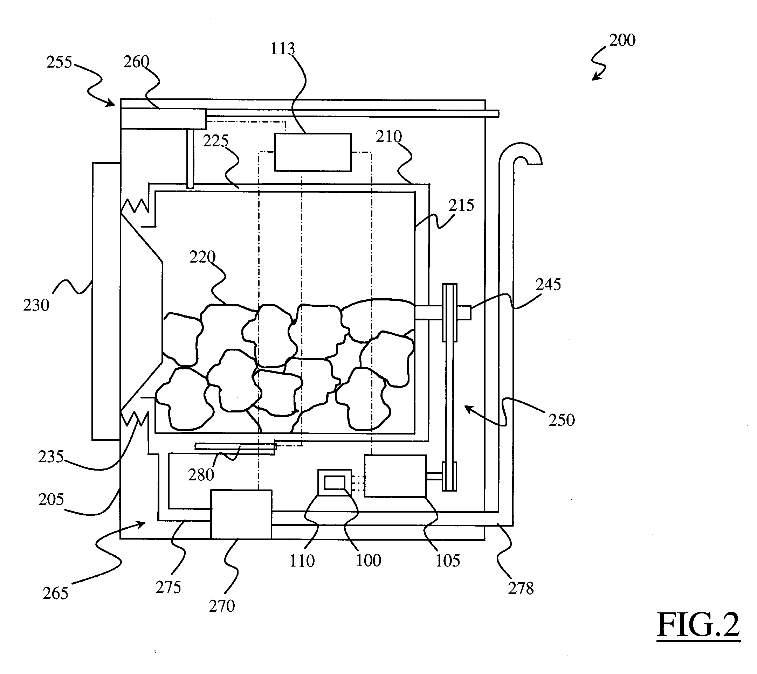

With reference to the figures, **Figure 2** is a schematic sectional view of a laundry machine wherein a solution according to an embodiment of the present invention may be applied. In the exemplary embodiment herein considered, the laundry machine is a washing machine; however the invention may be applied as well to a washing/drying machine and to a tumble dryer.

The washing machine **200** comprises an external casing or housing **205** in which a washing tub **210** is provided, containing a rotatable perforated drum **215** where the laundry **220** to be washed can be loaded. The tub **210** and the drum **215** both have preferably a substantially cylindrical shape. A hollow space **225** is defined between the tub **210** and the drum **215**. The housing **205** is provided with a loading/unloading door 230 which allows access to the washing tub **210** and the drum **215**. The tub **210** is preferably suspended in a floating manner inside the housing **205**, advantageously by means of a number of coil springs and shock-absorbers that are not illustrated in the enclosed Figures. The tub **210** is preferably connected to the housing **205** by means of an elastic bellows **235**, or gasket.

The drum **215** is advantageously rotated by an electric motor, such as the motor **105** of **Figure 1**, which preferably transmits the rotating motion to the shaft **245** of the drum **215,** advantageously by means of a belt/pulley system **250**. In a different embodiment of the invention, not illustrated, the motor **105** can be directly associated with the shaft **245** of the drum **215**. The motor **105** is supplied with a set of AC supply voltages **Vs1**, **Vs2**, **Vs3** generated by an inverter supply block comprising an inverter, such as the inverter supply block **100** of **Figure 1**. As described above, the inverter supply block **100** is mounted on a PCB **110** located within the housing **205**, for example close to the motor **105** itself.

A water inlet circuit **255** is arranged preferably in the upper part of the washing machine **200** and is suited to supply an operative fluid including water and washing/rinsing products (*i.e*., detergent, softener, etc.) into the tub **210**. The water inlet circuit **255** preferably comprises a removable drawer **260** provided with various compartments suited to be filled with washing and/or rinsing products. The water inlet circuit of a washing machine is well known in the art, and therefore will not be described in detail. In the embodiment herein described, the water is advantageously supplied into the tub **210** by making it flow through the drawer **260.**

The washing machine **200** further comprises a water outlet circuit **265.** The water outlet circuit **265** advantageously comprises a drain pump **270**, a first pipe **275** connecting the tub **210** to the drain pump **270** and an outlet pipe **278** ending outside the housing **205.** The water outlet circuit **265** is suited to drain the operative fluid from the tub **210** to the outside. Preferably the water outlet circuit **265** comprises a filtering device, not illustrated, connected upstream the drain pump **270** for protecting the latter from foreign bodies coming from the laundry.

Advantageously, the washing machine **200** comprises a heater circuit or apparatus **280** (hereinafter, simply referred to as heater apparatus) for heating up the operative fluid (*e.g.,* free water and/or water mixed with washing and/or rinsing products) inside the tub **210.** Preferably, the heater apparatus **280** is located within a sump provided at the bottom of the tub **210** and fluidly connected to the water outlet circuit **265.** In the embodiment considered, the heater apparatus **280** comprises one or more insulated electric resistance heaters (not shown in **Figure 2**) configured to be selectively activated by closing proper switches when the washing program carried out by the washing machine **200** requires to heat up the operative fluid inside the tub **210**.

In the embodiment illustrated in the enclosed figures the laundry machine is a washing machine, and therefore the electrical heater apparatus **280** may be arranged for heating up free water and/or water mixed with washing and/or rinsing products, so as to wash the laundry with an operative fluid having a set temperature; also in case of a washing/drying machine the electrical heater apparatus **280** may be arranged for heating up free water and/or water mixed with washing and/or rinsing products.

However in a different embodiment, in which the laundry machine is a tumble dryer, but also in the case of a washing/drying machine, the electrical heater apparatus **280** may be arranged for heating up (or drying) the air before introducing it in the drum, so as to dry the laundry contained therein.

The washing machine **200** comprises a control unit, such as the control unit **113** illustrated in **Figure 1**. The control unit **113** is connected to the various parts of the laundry washing machine **200** in order to ensure its operations. The control unit **113** is preferably, but not necessarily, connected to the water inlet circuit **255**, the water outlet circuit **265**, the heater apparatus **280**, the electric motor **105** and the inverter supply block **100.**

According to an embodiment of the present invention, the inrush current of the inverter supply block **100** during the bulk capacitor charging phase is limited by forcing the inrush current to flow through the resistance heaters of the heater apparatus **280**. Since the washing machine **200** (or, more generally, the laundry machine) is already provided with such resistive elements, the solution according to an embodiment of the present invention allows avoiding the installation of a dedicated limiter circuit including a NTC thermistor, such as the limiter circuit **145** of **Figure 1**.

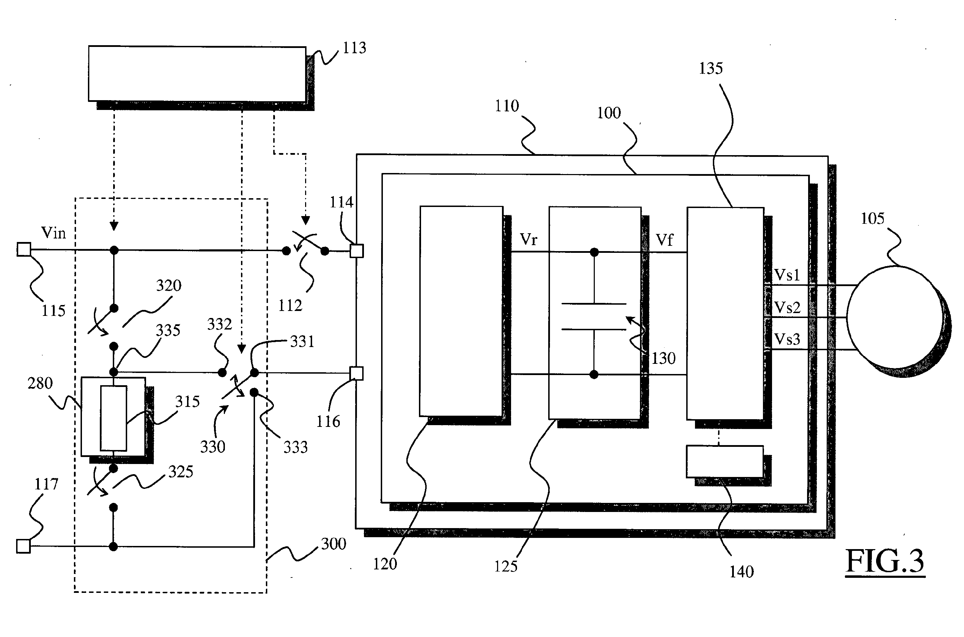

**Figure 3** schematically illustrates in terms of functional elements a limiter circuit **300** for limiting the inrush current of the inverter supply block **100** during the bulk capacitor charging phase according to an embodiment of the present invention. Clearly the following description can be applied both if the heater apparatus **280** is comprised in a washing machine or in a washing/drying machine and is arranged for heating the water or water mixed with washing/rinsing products, and also if the heater apparatus **280** is comprised in a tumble dryer or in a washing/drying machine and is arranged for heating the drying air.

The elements corresponding to those already shown in **Figure 1** and **2** are denoted with the same references, and their explanation is omitted for the sake of brevity.

The heater apparatus **280** is schematized in figure with an electric resistance heater **315** with a first terminal coupled to the line terminal **115** through a switch **320** and a second terminal coupled to the neutral terminal **117** through a switch **325**. Both the switches **320** and **325** are controlled by a logic circuit, such as the control unit **113** of the washing machine. In a further embodiment, not illustrated, the switches **320** and **325** may be comprised in the heater apparatus **280**. When the heater apparatus **280** is activated, for example, in the case of a washing machine, for heating up the operative fluid included in the water tub **210** (see **Figure 2**), both the switch **320** and **325** are closed, so that current flows through the electric resistance heater **315** from the line terminal **115** to the neutral terminal **117**. Similar considerations apply if the heater apparatus **280** is structured in a different way, *e.g*., with a plurality of electric resistance heaters connected in parallel between the line terminal **305** and the neutral terminal **310** and individually activable for example through corresponding switches.

According to an embodiment of the present invention, the limiter circuit **300** for limiting the inrush current of the inverter supply block **100** during the bulk capacitor charging phase comprises the electric resistance heater **315** and the switches **320**, **325**, as well as a two-way switch **330** having an input terminal **331** coupled to the second terminal **116** of the inverter supply block **100,** a first output terminal **332** coupled to the first terminal of the electric resistance heater **315** (circuit node **335**), and a second output terminal **333** coupled to the neutral terminal **117.** The two-way switch **330** is controlled, for example by the control unit **113** of the washing machine, in such a way that the input terminal **331** is selectively connectable either to the first output terminal **332** or to the second output terminal **333** thereof.

According to an embodiment of the present invention, the limiter circuit **300** allows to charge the (initially discharged) bulk capacitor **130** of the filter circuit **125** with a reduced inrush current in the following way.

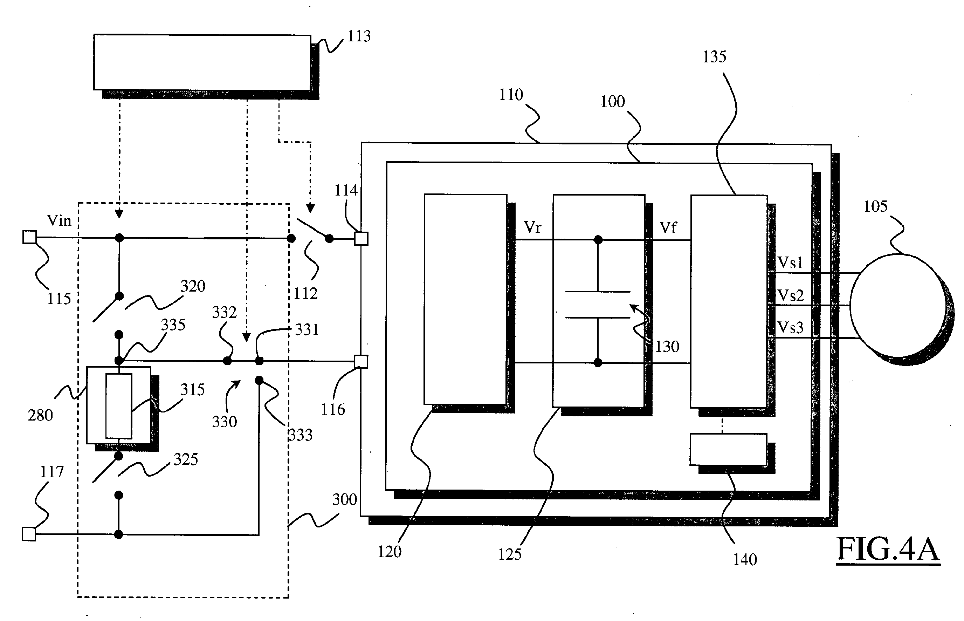

Prior to close the switch **112**, and therefore prior to the activation of the inverter supply block **100,** the two-way switch **330** has the input terminal **331** that is connected to the first output terminal **332**, so that the second terminal **116** of the inverter supply block **100** is coupled to the circuit node **335**; moreover, the switches **320** and **325** are open. In this situation, illustrated in **Figure 4A**, no current is drawn by the inverter supply block **100.**

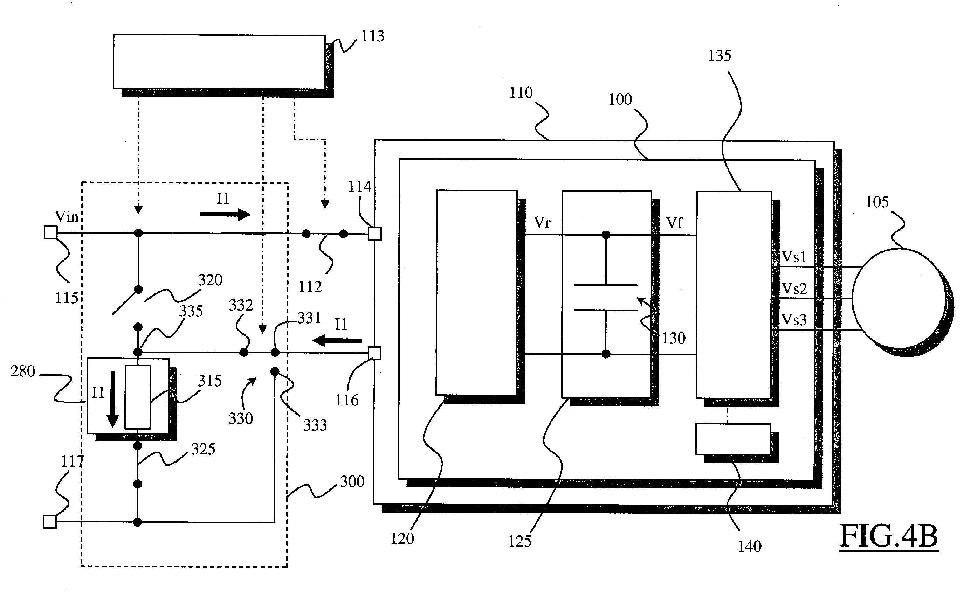

As soon as the switch **112** is closed for activating the inverter supply block **100** to the purpose of supplying the motor **105** of the washing machine **200**, the switch **325** is closed. In this way, as illustrated in **Figure 4B**, the inverter supply block **100** draws from the mains a current **I1**. The current **I1** is sourced by the line terminal **115**, and enters the inverter supply block **100** via its first terminal **114** passing through the switch **112**. The same current **11** is provided back to neutral terminal **117** via the second terminal 116 of the inverter supply block **100** passing through the two-way switch **330**, the electric resistance heater **315**, and the switch **325**, respectively. Therefore, (a fraction of) the current **11** starts to charge the bulk capacitor **130**. Thanks to the presence of the electric resistance heater **315**, the current **11** drawn by the inverter supply block **100,** *i.e*., its inrush current, results to be limited to a sufficiently low value such to avoid (or at least reduce) the damage of the components of the inverter supply block **100** and/or the blowing of fuses.

With the passing of time, the bulk capacitor **130** becomes sufficiently charged, and the maximum value of the current **11** drops.

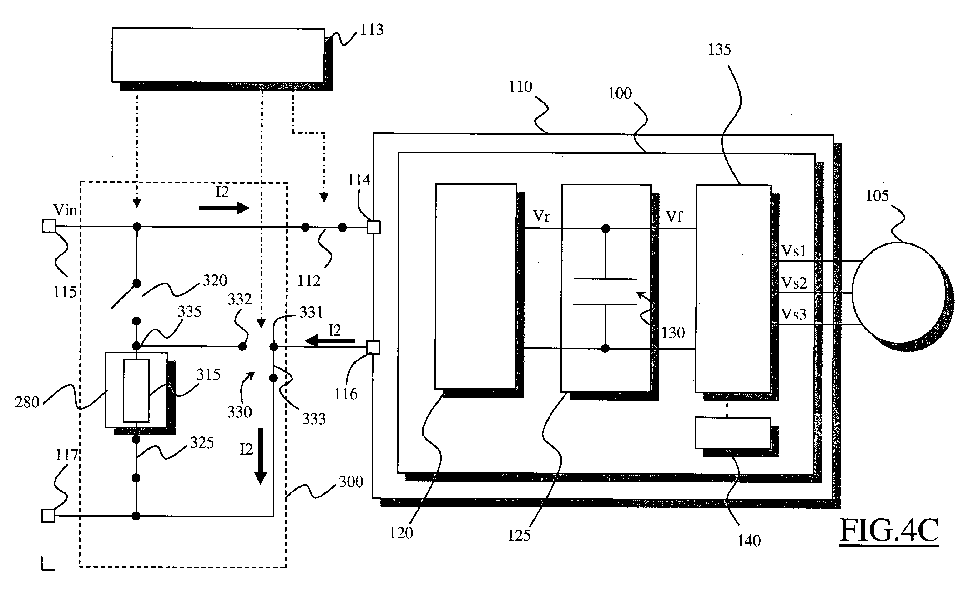

After an amount of time that depends on the capacity of the bulk capacitor **130** as well as on the resistance of the electric resistance heater **315** and of the switches **112**, **330**, **325**, the control unit **113** drives the two-way switch **330** in such a way that the input terminal **331** is connected to the second output terminal **333**, so that the second terminal **116** of the inverter supply block **100** results to be coupled to the neutral terminal **117.** The current drawn by the inverter supply block **100** - illustrated in **Figure 4C** with the reference **I2 -** is still sourced by the line terminal **115**, and enters the inverter supply block **100** via its first terminal **114** passing through the switch **112**. The same current **I2** is provided back to neutral terminal **117** via the second terminal **116** of the inverter supply block **100** passing through the two-way switch **330**, in this case bypassing the electric resistance heater **315**. Thanks to this arrangement, once the bulk capacitor **130** is sufficiently charged, the voltage drop previously introduced by the electric resistance heater **315** (see **Figure 4B**) is removed, so that the inverter supply block **100** is fed with the (substantially) full input voltage **Vin** provided by the mains, and not only with a portion thereof.

Compared to the known solutions, the limiter circuit **300** according to the present invention does not provide for a dedicated NTC thermistor, since it exploits an already present resistive element (included in the resistance heater). Therefore, the solution according to the present invention is more efficient in terms of cost and space occupation.

Although in the present description reference has been explicitly made to an inverter supply block for a motor of a washing machine, the concepts of the present invention may be extended to a supply block adapted to drive as well other electrical devices included in a washing machine, such as for example compressors, pumps and/or fans.

In a further embodiment, not illustrated, a single limiter circuit analogous to the one described above may be applied to limit the charging current (inrush current) of two or more different inverter supply blocks provided in a laundry machine, for example an inverter supply block of the motor for rotating the drum and an inverter supply block of the motor of a draining pump; in this embodiment the single limiter circuit is connected to the input ports of different inverter supply blocks, in such a way that the input ports of such different inverter supply blocks are connected, in parallel one another, to the single limiter circuit.

Clearly if a laundry machine is provided with more than one electrical heater apparatus, as for example in the case of a washing/drying machine, and with more than one inverter supply block for electrically supplying more than one electrical devices (e.g. the motor for rotating the drum and a draining pump or a fan), there is the possibility to use each electrical heater apparatus in a different limiter circuit, analogous to the one described above, in order to limit the charging current of one or more of the inverter supply blocks provided in the laundry machine.

## Claims

1. A laundry machine (**200**) adapted to process laundry (**220**) by means of an operative fluid, comprising:
- a drum (**215**) for housing the laundry (**220**);
- an electrical heater apparatus (**280**) configured to heat up the operative fluid;
- at least one electrical device (**105**);
- an inverter supply block **(100)** for electrically supplying the at least one electrical device (**105**), the inverter supply block (**100**) comprising a bulk capacitor (**130**), and
- a limiter circuit (**300**; **280**) configured to temporarily limit a charging current drawn by the inverter supply block **(100)** during a bulk capacitor (**130**) charging phase,
**characterized in that**
the limiter circuit (**300; 280; 330**) is configured to selectively force the passage of the charging current trough the electrical heater apparatus (**280**).

2. The laundry machine (**200**) of claim 1, wherein the electrical heater apparatus (**280**) comprises at least one electric resistance heater (**315**), the limiter circuit (**300; 280; 330**) being configured to selectively force the passage of the charging current through the at least one electric resistance heater **(315)** during the bulk capacitor (**130**) charging phase.

3. The laundry machine **(200)** of claim 2, wherein the limiter circuit (**300; 280; 330**) further comprises a switch (**330**) switchable between:
- a first configuration, wherein the inverter supply block **(100)** is coupled to an AC power supply **(115; 117)** for receiving the charging current through the at least one electric resistance heater (**315**), and
- a second configuration, wherein the inverter supply block is coupled to the AC power supply **(115; 117)** for receiving the charging current bypassing the electric resistance heater (**315**).

4. The laundry machine **(200)** of claim 3, wherein:
- the AC power supply comprises a first supply terminal (**115**) and a second supply terminal (**117**), the electrical heater apparatus **(280)** being coupled between the first supply terminal (**115**) and the second supply terminal (**117**), and
- the inverter supply block **(100)** includes a first input terminal (**114**) selectively connectible to the first supply terminal (**115**) through a further switch (**112**) and a second input terminal (**116**) selectively connectible to the second supply terminal (**117**) or to the electrical heater apparatus **(280)** through the switch (**330**).

5. The laundry machine **(200)** of claim 4, wherein the inverter supply block **(100)** comprises:
- a rectifier circuit **(120)** adapted to convert a sinusoidal input voltage (**Vin**) provided by the AC power supply into a unipolar rectified voltage (**Vr**);
- a filter circuit (**125**) adapted to generate a filtered voltage (**Vf**) from the rectified voltage (**Vr**), the filter circuit (**125**) including the bulk capacitor (**130**), and
- an inverter circuit (**135**) adapted to generate supply voltages (**Vs1**, **Vs2**, **Vs3**) for the at least one electrical device (**105**) from the filtered voltage (**Vf**).

6. The laundry machine **(200)** of any one among the preceding claims, wherein the laundry machine **(200)** is a selected one among:
- a washing machine;
- dryer machine, and
- a washing/drying machine.

7. The laundry machine **(200)** of any one among the preceding claims, wherein said electrical device (**105**) comprises at least one among:
- an electric motor,
- a compressor,
- a pump, and
- a fan.

8. A method for operating a laundry machine (**200**) adapted to process laundry (**220**) by means of an operative fluid, the laundry machine (**200**) comprising:
- a drum (**215**) for housing the laundry (**220**);
- an electrical heater apparatus (**280**) configured to heat up the operative fluid;
- at least one electrical device (**105**);
- an inverter supply block (**100**) for electrically supplying the at least one electrical device (**105**), the inverter supply block (**100**) comprising a bulk capacitor (**130**), the method comprising:
- temporarily limiting a charging current drawn by the inverter supply block (**100**) during a bulk capacitor (**130**) charging phase,
**characterized in that**
- said temporarily limiting a charging current comprises selectively forcing the passage of the charging current through the electrical heater apparatus (**280**).

9. The method of claim 8, wherein said selectively forcing the passage of the charging current through the electrical heater apparatus (**280**) comprises selectively forcing the passage of the charging current through at least one electric resistance heater (**315**) during the bulk capacitor charging phase.

10. The method of claim 9, further including:
- coupling the inverter supply block (**100**) to an AC power supply (**115; 117**) through the at least one electric resistance heater (**315**) during the bulk capacitor charging phase, and
- coupling the inverter supply block (**100**) to the AC power supply (**115**; **117**) bypassing the electric resistance heater (**315**) after the bulk capacitor charging phase.

## Patentansprüche

1. Eine Wäschemaschine (200), die dazu ausgelegt ist, Wäsche (220) mittels eines wirksamen Fluids zu behandeln, die aufweist:
- eine Trommel (215) zum Aufnehmen der Wäsche (220);
- eine elektrische Heizvorrichtung (280), die dazu ausgelegt ist, das wirksame Fluid aufzuheizen;
- mindestens eine elektrische Vorrichtung (105);
- einen Inverterversorgungsblock (100) zur elektrischen Versorgung der mindestens einen elektrischen Vorrichtung (105), wobei der Inverterversorgungsblock (100) einen Leistungskondensator (130) aufweist, und
- eine Begrenzerschaltung (300; 280), die dazu ausgelegt ist, einen Aufladestrom vorübergehend zu begrenzen, der vom Inverterversorgungsblock (100) während einer Aufladephase des Leistungskondensators (130) entnommen wird,
**dadurch gekennzeichnet, dass**
die Begrenzerschaltung (300; 280; 330) dazu ausgelegt ist, den Durchgang des Aufladestroms durch die elektrische Heizvorrichtung (280) selektiv zu erzwingen.

2. Die Wäschemaschine (200) nach Anspruch 1, wobei die elektrische Heizvorrichtung (280) mindestens eine elektrische Widerstandsheizung (315) aufweist, wobei die Begrenzerschaltung (300; 280; 330) dazu ausgelegt ist, während der Aufladephase des Leistungskondensators (130) den Durchgang des Aufladestroms durch die mindestens eine elektrische Widerstandsheizung (315) selektiv zu erzwingen.

3. Die Wäschemaschine (200) nach Anspruch 2, wobei die Begrenzerschaltung (300; 280; 330) ferner einen Schalter (330) aufweist, der umschaltbar ist zwischen:
- einer ersten Konfiguration, in der der Inverterversorgungsblock (100) gekoppelt ist mit einer Wechselspannungsversorgung (115; 117) zum Empfangen des Aufladestroms durch die mindestens eine elektrische Widerstandsheizung (315), und
- einer zweiten Konfiguration, in der der Inverterversorgungsblock gekoppelt ist mit der Wechselspannungsversorgung (115; 117) zum Empfangen des Aufladestroms unter Umgehung der elektrischen Widerstandsheizung (315).

4. Die Wäschemaschine (200) nach Anspruch 3, wobei:
- die Wechselspannungsversorgung einen ersten Versorgungsanschluss (115) und einen zweiten Versorgungsanschluss (117) aufweist, wobei die elektrische Heizvorrichtung (280) zwischen den ersten Versorgungsanschluss (115) und den zweiten Versorgungsanschluss (117) gekoppelt ist, und
- der Inverterversorgungsblock (100) einen ersten Eingangsanschluss (114), der selektiv mit dem ersten Versorgungsanschluss (115) über einen weiteren Schalter (112) verbindbar ist, und einen zweiten Eingangsanschluss (116), der selektiv mit dem zweiten Versorgungsanschluss (117) oder mit der elektrischen Heizvorrichtung (280) über den Schalter (330) verbindbar ist, umfasst.

5. Die Wäschemaschine (200) nach Anspruch 4, wobei der Inverterversorgungsblock (100) aufweist:
- eine Gleichrichterschaltung (120), die dazu ausgelegt ist, eine sinusförmige Eingangsspannung (Vin), die von der Wechselspannungsversorgung geliefert wird, in eine unipolare gleichgerichtete Spannung (Vr) umzuwandeln;
- eine Filterschaltung (125), die dazu ausgelegt ist, eine gefilterte Spannung (Vf) aus der gleichgerichteten Spannung (Vr) zu erzeugen, wobei die Filterschaltung (125) den Leistungskondensator (130) umfasst, und
- eine Inverterschaltung (135), die dazu ausgelegt ist, Versorgungsspannungen (Vs1, Vs2, Vs3) für die mindestens eine elektrische Vorrichtung (105) aus der gefilterten Spannung (Vf) zu erzeugen.

6. Die Wäschemaschine (200) nach einem der vorangehenden Ansprüche, wobei die Wäschemaschine (200) eine ausgewählte ist aus:
- einer Waschmaschine;
- einer Trocknermaschine, und
- einer Wasch-/Trockenmaschine.

7. Die Wäschemaschine (200) nach einem der vorangehenden Ansprüche, wobei die elektrische Vorrichtung (105) mindestens eines aufweist aus:
- einem Elektromotor,
- einem Kompressor,
- einer Pumpe, und
- einem Gebläse.

8. Ein Verfahren zum Betreiben einer Wäschemaschine (200), die dazu ausgelegt ist, Wäsche (220) mittels eines wirksamen Fluids zu behandeln, wobei die Wäschemaschine (200) aufweist:
- eine Trommel (215) zum Aufnehmen der Wäsche (220);
- eine elektrische Heizvorrichtung (280), die dazu ausgelegt ist, das wirksame Fluid aufzuheizen;
- mindestens eine elektrische Vorrichtung (105);
- einen Inverterversorgungsblock (100) zum elektrischen Versorgen der mindestens einen elektrischen Vorrichtung (105), wobei der Inverterversorgungsblock (100) einen Leistungskondensator (130) aufweist, wobei das Verfahren aufweist:
- vorübergehendes Begrenzen eines Aufladestroms, der während einer Aufladephase des Leistungskondensators (130) vom Inverterversorgungsblock (100) entnommen wird,
**dadurch gekennzeichnet, dass**
- das vorübergehende Begrenzen eines Aufladestroms das selektive Erzwingen des Durchgangs des Aufladestroms durch die elektrische Heizvorrichtung (280) aufweist.

9. Das Verfahren nach Anspruch 8, wobei das selektive Erzwingen des Durchgangs des Aufladestroms durch die elektrische Heizvorrichtung (280) das selektive Erzwingen des Durchgangs des Aufladestroms durch mindestens eine elektrische Widerstandsheizung (315) während der Leistungskondensator-Aufladephase aufweist.

10. Das Verfahren nach Anspruch 9, das ferner umfasst:
- Koppeln des Inverterversorgungsblocks (100) mit einer Wechselspannungsversorgung (115; 117) über die mindestens eine elektrische Widerstandsheizung (315) während der Leistungskondensator-Aufladephase, und
- Koppeln des Inverterversorgungsblocks (100) mit der Wechselspannungsversorgung (115; 117) unter Umgehung der elektrischen Widerstandsheizung (315) nach der Leistungskondensator-Aufladephase.

## Revendications

1. Machine à laver (200) adaptée pour traiter du linge (220) au moyen d'un fluide opérationnel, comprenant :
- un tambour (215) pour loger le linge (220) ;
- un appareil de chauffage électrique (280) configuré pour réchauffer le fluide opérationnel ;
- au moins un dispositif électrique (105) ;
- un bloc d'alimentation convertisseur (100) pour alimenter électriquement le au moins un dispositif électrique (105), le bloc d'alimentation convertisseur (100) comprenant un condensateur de découplage (130), et
- un circuit limiteur (300 ; 280) configuré pour limiter temporairement un courant de charge tiré par le bloc d'alimentation convertisseur (100) pendant une phase de charge du condensateur de découplage (130),
caractérisée en ce qui :
le circuit limiteur (300 ; 280 ; 330) est configuré pour forcer sélectivement le passage du courant de charge à travers l'appareil de chauffage électrique (280).

2. Machine à laver (200) selon la revendication 1, dans laquelle l'appareil de chauffage électrique (280) comprend au moins un élément de chauffage à résistance électrique (315), le circuit limiteur (300 ; 280 ; 330) étant configuré pour forcer sélectivement le passage du courant de charge à travers le au moins un élément de chauffage à résistance électrique (315) pendant la phase de charge du condensateur de découplage (130).

3. Machine à laver (200) selon la revendication 2, dans laquelle le circuit limiteur (300 ; 280 ; 330) comprend en outre un commutateur (330) pouvant être commuté entre :
- une première configuration, dans laquelle le bloc d'alimentation convertisseur (100) est couplé à une alimentation de courant alternatif (115 ; 117) pour recevoir le courant de charge à travers le au moins un élément de chauffage à résistance électrique (315), et
- une seconde configuration, dans laquelle le bloc d'alimentation convertisseur est couplé à l'alimentation de courant alternatif (115 ; 117) pour recevoir le courant de charge contournant l'élément de chauffage à résistance électrique (315).

4. Machine à laver (200) selon la revendication 3, dans laquelle :
- l'alimentation de courant alternatif comprend une première borne d'alimentation (115) et une seconde borne d'alimentation (117), l'appareil de chauffage électrique (280) étant couplé entre la première borne d'alimentation (115) et la seconde borne d'alimentation (117), et
- le bloc d'alimentation convertisseur (100) comprend une première borne d'entrée (114) pouvant être sélectivement raccordée à la première borne d'alimentation (115) par le biais d'un autre commutateur (112) et une seconde borne d'entrée (116) pouvant être sélectivement raccordée à la seconde borne d'alimentation (117) ou à l'appareil de chauffage électrique (280) par le biais du commutateur (330).

5. Machine à laver (200) selon la revendication 4, dans laquelle le bloc d'alimentation convertisseur (100) comprend :
- un circuit redresseur (120) adapté pour convertir une tension d'entrée sinusoïdale (Vin) fournie par l'alimentation de courant alternatif, en une tension rectifiée unipolaire (Vr) ;
- un circuit filtrant (125) adapté pour générer une tension filtrée (Vf) à partir de la tension rectifiée (Vr), le circuit filtrant (125) comprenant le condensateur de découplage (130), et
- un circuit convertisseur (135) adapté pour générer des tensions d'alimentation (Vs1, Vs2, Vs3) pour le au moins un dispositif électrique (105) à partir de la tension filtrée (Vf).

6. Machine à laver (200) selon l'une quelconque des revendications précédentes, dans laquelle la machine à laver (200) est sélectionnée parmi :
- un lave-linge ;
- un sèche-linge, et
- un lave-linge - sèche-linge.

7. Machine à laver (200) selon l'une quelconque des revendications précédentes, dans laquelle ledit dispositif électrique (105) comprend au moins l'un parmi :
- un moteur électrique,
- un compresseur,
- une pompe, et
- un ventilateur.

8. Procédé pour faire fonctionner une machine à laver (200) adaptée pour traiter du linge (220) au moyen d'un fluide opérationnel, la machine à laver (200) comprenant :
- un tambour (215) pour loger le linge (220) ;
- un appareil de chauffage électrique (280) configuré pour réchauffer le fluide opérationnel ;
- au moins un dispositif électrique (105) ;
- un bloc d'alimentation convertisseur (100) pour alimenter électriquement le au moins un dispositif électrique (105), le bloc d'alimentation convertisseur (100) comprenant un condensateur de découplage (130), le procédé comprenant l'étape consistant à :
- limiter temporairement un courant de charge tiré par le bloc d'alimentation convertisseur (100) pendant la phase de charge du condensateur de découplage (130),
**caractérisé en ce que** :
- ladite étape consistant à limiter temporairement un courant de charge comprend l'étape consistant à forcer sélectivement le passage du courant de charge à travers l'appareil de chauffage électrique (280).

9. Procédé selon la revendication 8, dans lequel ladite étape consistant à forcer sélectivement le passage du courant de charge à travers l'appareil de chauffage électrique (280) comprend l'étape consistant à forcer sélectivement le passage du courant de charge à travers au moins un élément à résistance électrique (315) pendant la phase de charge de condensateur de découplage.

10. Procédé selon la revendication 9, comprenant en outre les étapes consistant à :
- coupler le bloc d'alimentation convertisseur (100) à une alimentation de courant alternatif (115 ; 117) par le biais du au moins un élément de chauffage à résistance électrique (315) pendant la phase de charge du condensateur de découplage, et
- coupler le bloc d'alimentation convertisseur (100) à l'alimentation de courant alternatif (115 ; 117) en contournant l'élément de chauffage à résistance électrique (315) après la phase de charge du condensateur de découplage.
